# EUROPEAN PATENT SPECIFICATION

(11) **EP 3 047 169 B1**
(45) Date of publication and mention of the grant of the patent: **08.11.2017**
(21) Application number: 14790333.0
(22) Date of filing: 11.09.2014
(51) Int. Cl.: F16D 3/68, F16D 1/08

(54) **ELASTIC COUPLING FOR STEERING COLUMNS**
ELASTISCHE KUPPLUNG FÜR LENKSÄULEN
ACCOUPLEMENT ÉLASTIQUE POUR COLONNES DE DIRECTION

(30) Priority: 16.09.2013 IT TO20130753
(43) Date of publication of application: 27.07.2016
(73) Proprietor: Officine Vittorio Villa S.p.A., 24040 Castel Rozzone (BG) (IT)
(72) Inventor: SONCINI, Fabio, I-24040 Castel Rozzone (BG) (IT)
(74) Representative: Robba, Pierpaolo
(86) International application number: PCT/IB2014/064417
(87) International publication number: WO 2015/036946

(56) References cited:
- WO-A1-2005/019671
- DE-A1-102004 026 899
- FR-A- 1 120 149
- FR-A1- 2 655 110
- GB-A- 2 370 093
- US-A- 2 502 790
- US-A1- 2012 208 649

## Description

### Technical Sector

The present invention relates, generally, to an elastic coupling adapted to reduce the transmission of vibrations and noise.

In particular, the present invention relates to an elastic coupling adapted to be used in the steering columns of a motor vehicle in order to reduce the vibrations transmitted from the wheels to the steering wheel, and the noise.

### Prior Art

Elastic couplings, which are used to reduce the vibrations and the noise in steering columns of motor vehicles and which comprise two rigid elements, for example in the form of a flange or plate, and an elastic element positioned between them, are known. The two rigid elements are joined together by means of nuts or riveted pins. Other elastic couplings are e.g. known from US 2O12/0208649 and FR 1120149. The Applicant has established that the known elastic couplings have a number of problems.

A first problem relates to the difficulty of assembly of the coupling elements, which may result in faulty screwing or incorrect riveting of the coupling with possible malfunctioning.

A second problem consists in the fact that the known elastic couplings, in particular when they comprise parts in the form of a flange or plates, have a notable size compared to the dimensions required for them to be used in steering columns of motor vehicles.

A further problem of the known elastic couplings consists in the fact that they comprise a considerable number of different parts, this complicating assembly of the coupling.

The known elastic couplings, therefore, pose a variety of problems.

### Description of the Invention

One object of the present invention is to provide an elastic coupling which solves the problem of having a smaller size compared to the solutions used in the prior art.

Another object is that of obtaining an elastic coupling which is easy to produce and has a limited cost, while also allowing easy replacement of the elastic element in the event of wear.

A further object is that of providing elastic couplings with different ends, each adapted to be connected in different ways to a shaft of a steering column.

According to the present invention, this object and other objects are achieved by means of an elastic coupling defined by the accompanying claim 1 and the elastic element defined by the accompanying claim 11. It is to be understood that the accompanying claims form an integral part of the technical teachings provided here in the present description with regard to the invention.

### Short description of the figures

Further characteristic features and advantages of the invention will become clear from the following detailed description provided purely by way of a non-limiting example, with reference to the accompanying drawings in which:
- Figure 1 shows an exploded view of an elastic coupling according to the present invention; and
- Figure 2 shows a perspective view of embodiments of an elastic coupling according to the present invention.

### Description of Preferred Embodiments

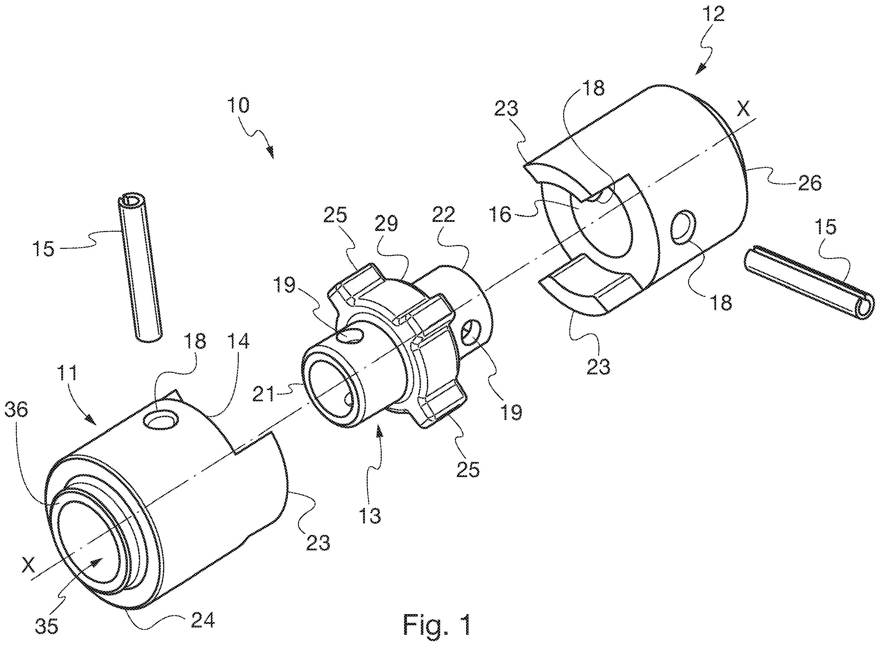

With reference to Figure 1 an elastic coupling 10 for steering columns in accordance with the present invention comprises a first half-shell 11, a second half-shell 12 and an elastic element 13 arranged between the first half-shell 11 and the second half-shell 12.

The first half-shell 11 and the second half-shell 12 respectively comprise a first seat 14 and a second seat 16 adapted to house the elastic element 13.

The first half-shell 11 and the second half-shell 12 are made for example of free-cutting steel with good machinability, referred to in the sector by the name of "AVZ steel"; in the embodiments described in detail below, where the elastic coupling 10 is formed as one piece with a shaft comprising a toothed wheel, the half-shells 11, 12 may for example be made of quenched and tempered steel of the type known as C40 or PR80 or low-alloy steel of the type C10 or 16NiCr4.

The elastic element 13 is designed to dampen the vibrations transmitted between the two half-shells 11, 12 and is for example made of a thermoplastic resin such as polyurethane, known in the sector by the name of TPU, preferably high-hardness polyurethane; the elastic element 13 may also be made of rubber.

The first half-shell 11 and the second half-shell 12 are each connected to the elastic element 13 by means of a respective pin; preferably they are connected by means of an elastic pin 15 of the known type, for example a split pin made of spring steel.

Each pin 15 is mounted transversely with respect to the axis of the elastic coupling 10 so as to pass through first holes 18 formed in the walls of each half-shell 11, 12 and second holes 19 which pass transversely through the elastic element 13.

Preferably the first and second holes 18, 19 are formed perpendicular to the axis X-X of the elastic coupling 10. Preferably, the elastic element 13 comprises a first axial extension 21 and a second axial extension 22 which extend in the direction of the axis X-X of the elastic coupling 10 and are adapted to be respectively inserted in the first seat 14 and in the second seat 16 of the first and second half-shell 11, 12.

In this embodiment of the invention, the second holes 19, adapted to house the pins 15, are formed through the axial extensions 21, 22 of the elastic element 13, as shown in Figure 1.

Preferably, the first half-shell 11 and the second half-shell 12 have a cylindrical shape, more preferably that of a hollow cylinder and consequently also the first seat 14, the second seat 16 and the axial extensions 21, 22 of the elastic element 13, designed to be housed inside the seats 14, have a cylindrical shape.

In a preferred manner, in the embodiment of the invention in which the first half-shell 11 and the second half-shell 12 have a cylindrical shape, each half-shell 11, 12 comprises a segment 23 that protrudes from the base surface of the cylindrical half-shell facing the elastic element 13; preferably each half-shell 11, 12 comprises at least two segments 23.

In this embodiment of the elastic coupling 10, the elastic element 13 comprises preferably a plurality of radial extensions 25 which are formed as one piece with the first axial extension 21 and with the second axial extension 22 and which extend radially around the axis X-X; in a preferred manner, the elastic element 13 has a star-shaped form with the radial extensions 25 arranged symmetrically with respect to the axis X-X of the elastic coupling 10.

Preferably, the elastic element 13 comprises a cylindrical shaped central body 29 with, for example, a diameter larger than the diameter of the axial extensions 21, 23 and smaller than the diameter of the radial extensions 25.

The central body 29 is made as one piece with the first axial extension 21, with the second axial extension 22 and with the radial extensions 25. Preferably, the radial extensions 25 extend radially from the central body 29 and have the same thickness, in the direction of the axis X-X, as the central body 29.

Advantageously, the segments 23 are adapted to cooperate with the radial extensions 25 of the elastic element 13 so as to keep the elastic element 13 in the working position, so that the first holes 18 of the half-shells are located opposite the second holes 19 of the elastic element, allowing insertion of the pins 15 inside the holes 18, 19.

Preferably, the segments 23 have a height smaller than or the same as the thickness of the central body 29 and the radial extensions 25 in the direction of the axis X-X.

Preferably, the first half-shell 11 and the second half-shell 12 are the same and the elastic coupling 10 is formed with the half-shells rotated through 90° with respect to each other about the axis X-X, as shown in Figure 1.

The elastic coupling 10 of the invention has a size of the outer diameter of the half-shells 11, 12 smaller than the diameter of the columns of the known steering columns, which typically have a diameter smaller than 50 mm, for example 42 mm.

Advantageously, the size of the elastic coupling 10 according to the invention is such that it may be easily used in existing steering columns.

For this purpose, the outer diameter of the half-shells 11, 12 is smaller than 35 mm and preferably is equal to 32 mm.

The first half-shell 11 and the second half-shell 12 of the elastic coupling 10 respectively comprise a first end 24, opposite the first seat 14, and a second end 26 situated in turn opposite the second seat 16.

The two ends 24, 26 of the elastic coupling 10, i.e. the ends of the first half-shell 11 and the second half-shell 12 opposite the elastic coupling 13, are adapted to be connected integrally to outer or end elements, in particular a shaft of a steering column.

In the first embodiment of the elastic coupling 10 according to the invention shown in detail in Figure 1, the first end 24 and the second end 26 are shaped in a known manner so as to make them suitable for being welded to a shaft of the column; for example, the shape of the half-shell 11, 12 is designed so that it may house a shaft provided with an abutting surface; the shaft is adapted to be fitted inside a hole 35 of the half-shell and then welded. Alternatively, the half-shells 11, 12 of the elastic coupling 10 may be connected together with a tube; in this case the ends 24, 26 of the half-shells are formed with a projection 36 and the inside of the tube is adapted to use the projection 36 of the half-shell as a centring means in order to position the tube before welding.

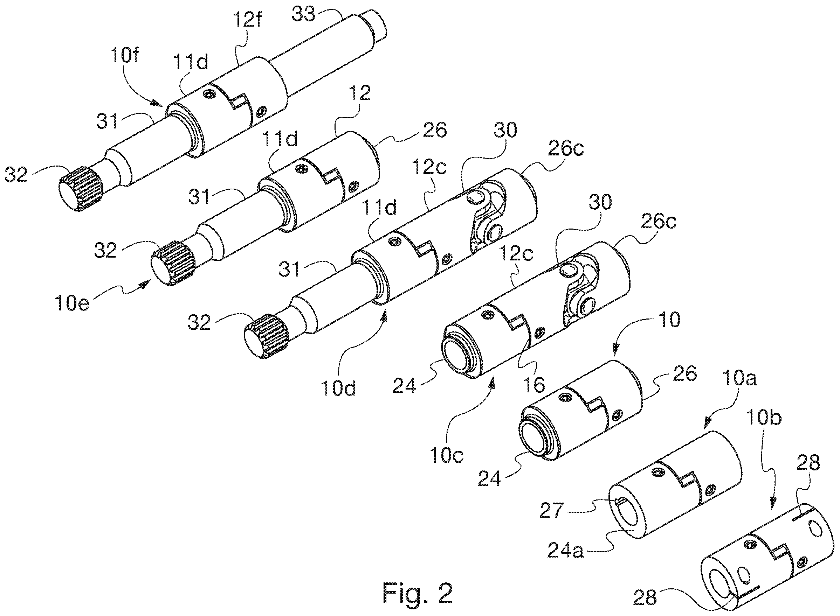

Figure 2 shows alternative embodiments of the elastic coupling 10 according to the invention.

In particular, the embodiment of the elastic coupling indicated in Figure 2 by 10a comprises at least one end 24a having a keyway 27, and the coupling 10a is adapted to be connected integrally with a shaft in a known manner by means of splines or keys.

The embodiment of the elastic coupling indicated in Figure 2 by 10b comprises a notch 28 formed in at least one of the two ends 24, 26, and the coupling 10b is adapted to be connected integrally to a shaft in a known manner, for example by means of a force-fit.

The embodiment of the elastic coupling indicated in Figure 2 by 10c comprises a cardan joint 30 integrated in the second half-shell 12c, between the second seat 16 and the second end 26c; the ends 24, 26c of the elastic coupling 10c may be of the type to be welded, as in the embodiment indicated by 10 in Figure 2, may be provided with the keyway, as in the embodiment indicated by 10a, or be of the type for mounting, as in the embodiment indicated by 10b.

The embodiment of the elastic coupling indicated in Figure 2 by 10d comprises, in a similar manner to the coupling 10c described above, a cardan joint 30 integrated in the second half-shell 12c, while the first half-shell 11d is connected integrally to a first shaft 31 which terminates in a toothed wheel 32; preferably, the first shaft 31 and the first half-shell 11d are formed by means of turning as one piece.

The embodiment of the elastic coupling indicated in Figure 2 by 10e comprises, in a similar manner to the coupling 10 described above, a second half-shell 12 with the second end 26 shaped so that it may be welded to an end part, for example a shaft of the column, and a first half-shell 11d connected integrally with a first shaft 31 which terminates in a toothed wheel 32, in a similar manner to the coupling 10d described above.

The embodiment of the elastic coupling indicated in Figure 2 by 10f comprises, in a similar manner to the couplings 10d and 10e described above, a first half-shell 11d connected integrally to a first shaft 31 which terminates in a toothed wheel 32; the elastic coupling 10f further comprises a second half-shell 12f connected integrally to a second shaft 33; preferably the first shaft 31 and the first half-shell 11d are formed by means of turning as one piece, as are the second shaft 33 and the second half-shell 12f.

Preferably, the first shaft 31, the first half-shell 11d and the toothed wheel 32 undergo a heat hardening treatment and are therefore made of quenched and tempered steel of the type known as C40 or PR80, or alternatively low-alloy steel of the type C10 or 16NiCr4 subjected to a subsequent case-hardening and tempering treatment.

In addition to the embodiments of the invention described, further alternative solutions of elastic couplings which comprise the two ends according to two of the different embodiments described are possible: for example the first end 24 adapted to be welded, and the second end 26 formed with keyways.

The different embodiments of the elastic coupling 10 according to the invention are suitable for being used in various configurations and the operation of the coupling in the various configurations is now described.

The elastic coupling with seats for mounting, in the embodiments indicated by 10, 10a and 10b in Figure 2, allows use of the elastic coupling with different types of systems for connection to the shaft.

The elastic coupling with integrated cardan joint, in the embodiment indicated by 10c in Figure 2, allows use of the elastic coupling with shafts of any length.

The elastic coupling with integrated end part, for example a shaft, and cardan joint, in the embodiment indicated by 10d in Figure 2, is suitable for use with short shafts: by integrating the cardan joint a considerable reduction in the amount of machining is achieved.

The elastic coupling with a toothed end part in the embodiment indicated by 10e in Figure 2 is used for combination together with a shaft of considerable length, which would make machining thereof from solid material costly.

The elastic coupling with two shafts, in the embodiment indicated by 10f in Figure 2, is suitable for replacing a complete shaft which already has a damping device.

In all the embodiments described, with the elastic coupling 10 according to the invention advantageously a coupling assembled as one piece may be obtained, owing to the pins 15 which fasten the half-shells 11, 12 together with the elastic element 13, making it more practical for use as a replacement part in a steering column.

The elastic coupling according to the invention also offers the following advantages: very simple constructional design; no need for the tightening of nuts with a specific torque or riveting operations in order to connect together the parts of the coupling; a compact volume; easy replacement of the elastic element in the event of wear; as well as a limited cost.

Advantageously the elastic coupling according to the invention, by eliminating mechanical connecting parts such as screws or riveted pins, eliminates the problems resulting from faulty screwing or incorrect riveting with possible malfunctioning of the coupling.

Moreover, the elastic coupling according to the invention, even in the case of breakage of the elastic element or radial extensions, remains functional; in this case there would still be contact between the protruding segments of the two half-shells which would continue to transmit the movement between the two half-shells.

Naturally, the description provided above may be subject to obvious modifications and/or variations as regards the dimensions, forms, materials, components and connections as well as the details of the design shown and the method of operation, without departing from the invention as described in the claims below.

## Claims

1. Elastic coupling (10) for steering columns comprising:
- a first half-shell (11) having a first seat (14);
- a second half-shell (12) having a second seat (16);
- an elastic element (13) arranged between the first half-shell (11) and the second half-shell (12) and adapted to dampen the vibrations transmitted between the two half-shells (11, 12),
- a first axial extension (21) and a second axial extension (22) adapted to be respectively inserted in the first seat (14) of the first half-shell (11) and in the second seat (16) of the second half-shell (12), wherein the first half-shell (11) and the second half-shell (12) are each connected to the elastic element (13) by means of a corresponding pin (15) which is mounted transversely relative to the axis (X-X) of the elastic coupling (10),
**characterized in that** the first half-shell (11) and the second half-shell (12) have a cylindrical shape and each comprise a segment (23) that protrudes from the base surface of the cylindrical half-shell facing the elastic element (13), and **in that** said elastic element (13) comprises a plurality of radial extensions (25) which are formed as one piece with the first axial extension (21) and with the second axial extension (22) and which extend radially around the axis (X-X) of the elastic coupling (10), the segments (23) being adapted to cooperate with the radial extensions (25) so as to keep the elastic element (13) in the working position.

2. Elastic coupling (10) according to claim 1, **characterized in that** said pins (15) are mounted perpendicularly relative to the axis (X-X) of the elastic coupling (10), through first holes (18) formed in the walls of each half-shell (11, 12), and through second holes (19) passing through the elastic element (13).

3. Elastic coupling (10) according to claim 2, **characterized in that** said second holes (19) passing through the elastic element (13) are made through the axial extensions (21, 22) of the elastic element (13).

4. Elastic coupling (10) according to one of the preceding claims, **characterized in that** said elastic element (13) comprises a central body (29) formed as one piece with the first axial extension (21), with the second axial extension (22) and with the radial extensions (25), wherein said radial extensions (25) extend radially from the central body.

5. Elastic coupling (10) according to one of the preceding claims, **characterized in that** the first half-shell (11), the second half-shell (12), the first seat (14), the second seat (16) and the axial extensions (21, 22) of the elastic element (13) have a cylindrical shape.

6. Elastic coupling (10) according to one of the preceding claims, **characterized in that** said first half-shell (11) and said second half-shell (12) are the same and the elastic coupling (10) is formed with the half-shells rotated 90° relative to each other about the axis (X-X) of the elastic coupling (10).

7. Elastic coupling (10) according to one of the preceding claims, **characterized in that** said first half-shell (11) and said second half-shell (12) respectively comprise a first end (24) opposite to said first seat (14) and a second end (26) opposite to said second seat (16), said first and second ends (24, 26) being adapted to be integrally connected to external elements or end elements, in particular to a shaft of a steering column.

8. Elastic coupling (10, 10a, 10b) according to claim 7, **characterized in that** at least one of said first half-shell (11) and said second half-shell (12) comprises an end (24a, 24, 26) having a keyway (27) or a notch (28) for integrally connecting the coupling (10, 10a, 10b) to a shaft.

9. Elastic coupling (10, 10c, 10d) according to one of claims 7 or 8, **characterized in that** it comprises a cardan joint (30) integrated in a half-shell (12c).

10. Elastic coupling (10, 10d, 10e, 10f) according to one of claims 7, 8 or 9, **characterized in that** it comprises at least one shaft (31, 33) integrally connected to a half-shell (11d, 12f).

11. Elastic element (13) for an elastic coupling (10) according to one of the preceding claims, comprising a first axial extension (21) and a second axial extension (22) adapted to be respectively inserted in a first half-shell (11) and in a second half-shell (12) of the elastic coupling (10), whereby said axial extensions (21, 22) further comprise holes (19) made transversely to the axis (X-X) of the elastic coupling (10) and adapted to house pins (15) for connecting the first half-shell (11) and the second half-shell (12) to the elastic element (13) said elastic element (13) further comprising a plurality of radial extensions (25) which are formed as one piece with the first axial extension (21) and with the second axial extension (22) and which extend radially around the axis (X-X) of the elastic coupling (10)

## Patentansprüche

1. Elastische Kupplung (10) für Lenksäulen mit:
- einer ersten Halbschale (11), die einen ersten Sitz (14) hat;
- einer zweiten Halbschale (12), die einen zweiten Sitz (16) hat;
- einem elastischen Element (13), das zwischen der ersten Halbschale (11) und der zweiten Halbschale (12) angeordnet und dafür vorgesehen ist, zwischen den beiden Halbschalen (11, 12) übertragene Schwingungen zu dämpfen,
- einer ersten axialen Verlängerung (21) und einer zweiten axialen Verlängerung (22), die dafür vorgesehen sind, jeweils in den ersten Sitz (14) der ersten Halbschale (11) bzw. in den zweiten Sitz (16) der zweiten Halbschale (12) eingeführt zu werden, wobei die erste Halbschale (11) und die zweite Halbschale (12) jeweils mit dem elastischen Element (13) mittels eines entsprechenden Stifts (15) verbunden sind, der senkrecht relativ zu der Achse (X-X) der elastischen Kupplung (10) montiert ist,
**dadurch gekennzeichnet, dass** die erste Halbschale (11) und die zweite Halbschale (12) eine zylindrische Form haben und jeweils ein Segment (13) aufweisen, das von der Basisfläche der zylindrischen Halbschale, die dem elastischen Element (13) zugewandt ist, vorsteht, und dass das elastische Element (13) mehrere radiale Verlängerungen (25) aufweist, die einstückig mit der ersten axialen Verlängerung (21) und mit der zweiten axialen Verlängerung (22) ausgebildet sind und die sich radial um die Achse (X-X) der elastischen Kupplung (10) erstrecken, wobei die Segmente (23) dafür ausgelegt sind, mit den radialen Verlängerungen (25) zusammen zu wirken, um das elastische Element (13) in der Arbeitsposition zu halten.

2. Elastische Kupplung (10) nach Anspruch 1, **dadurch gekennzeichnet, dass** die Stifte (15) senkrecht relativ zu der Achse (X-X) der elastischen Kupplung (10) durch erste Löcher (18) montiert sind, die in den Wänden jeder Halbschale (11, 12) gebildet sind, und durch zweite Löcher (19), die durch das elastische Element (13) hindurch verlaufen.

3. Elastische Kupplung (10) nach Anspruch 2, **dadurch gekennzeichnet, dass** die zweiten Löcher (19), die durch das elastische Element (13) verlaufen, durch die axialen Verlängerungen (21, 22) des elastischen Elements (13) hindurch gebildet sind.

4. Elastische Kupplung (10) nach einem der vorstehenden Ansprüche, **dadurch gekennzeichnet, dass** das elastische Element (13) einen zentralen Körper (29) aufweist, der einstückig mit der ersten axialen Verlängerung (21), mit der zweiten axialen Verlängerung (22) und mit den radialen Verlängerungen (25) ausgebildet ist, wobei die radialen Verlängerungen (25) sich radial von dem zentralen Körper aus erstrecken.

5. Elastische Kupplung (10) nach einem der vorstehenden Ansprüche, **dadurch gekennzeichnet, dass** die erste Halbschale (11), die zweite Halbschale (12), der erste Sitz (14), der zweite Sitz (16) und die axialen Verlängerungen (21, 22) des elastischen Elements (13) eine zylindrische Form haben.

6. Elastische Kupplung (10) nach einem der vorstehenden Ansprüche, **dadurch gekennzeichnet, dass** die erste Halbschale (11) und die zweite Halbschale (12) gleich sind und die elastische Kupplung (10) mit den relativ zueinander um die Achse (X-X) der elastischen Kupplung (10) um 90° verdrehten Halbschalen gebildet ist.

7. Elastische Kupplung (10) nach einem der vorstehenden Ansprüche, **dadurch gekennzeichnet, dass** die erste Halbschale (11) und die zweite Halbschale (12) jeweils ein erstes Ende (24), das dem ersten Sitz (14) gegenüber liegt, und ein zweites Ende (26), das dem zweiten Sitz (16) gegenüber liegt, aufweisen, wobei die ersten und zweiten Enden (24, 26) dafür ausgelegt sind, integral an externe Elemente oder Endelemente angeschlossen zu werden, insbesondere an eine Welle einer Lenksäule.

8. Elastische Kupplung (10, 10a, 10b) nach Anspruch 7, **dadurch gekennzeichnet, dass** von der ersten Halbschale (11) und der zweiten Halbschale (12) wenigstens eine ein Ende (24a, 24, 26) mit einer Keilnut (27) oder einer Kerbe (28) zum integralen Anschließen der Kupplung (10, 10a, 10b) an eine Welle aufweist.

9. Elastische Kupplung (10, 10c, 10d) nach einem der Ansprüche 7 oder 8, **dadurch gekennzeichnet, dass** sie ein Kardangelenk (30) aufweist, das in die Halbschale (12c) integriert ist.

10. Elastische Kupplung (10, 10d, 10e, 10f) nach einem der Ansprüche 7, 8 oder 9, **dadurch gekennzeichnet, dass** sie wenigstens eine Welle (31, 33) aufweist, die integral an eine Halbschale (11d, 12f) angeschlossen ist.

11. Elastisches Element (13) für eine elastische Kupplung (10) nach einem der vorstehenden Ansprüche mit einer ersten axialen Verlängerung (21) und einer zweiten axialen Verlängerung (22), die dafür vorgesehen sind, jeweils in eine erste Halbschale (11) bzw. in eine zweite Halbschale (12) der elastischen Kupplung (10) eingeführt zu werden, wobei die axialen Verlängerungen (21, 22) Löcher (19) aufweisen, die quer zu der Achse (X-X) der elastischen Kupplung (10) verlaufen und dafür vorgesehen sind, Stifte (15) zum Anschließen der ersten Halbschale (11) und der zweiten Halbschale (12) an das elastische Element (13) aufzunehmen, wobei das elastische Element (13) zudem mehrere radiale Verlängerungen (25) aufweist, die einstückig mit der ersten axialen Verlängerung (21) und mit der zweiten axialen Verlängerung (22) ausgebildet sind und die sich radial um die Achse (X-X) der elastischen Kupplung (10) erstrecken.

## Revendications

1. Accouplement élastique (10) pour colonnes de direction comprenant :
- une première demi-coque (11) ayant un premier logement (14) ;
- une seconde demi-coque (12) ayant un second logement (16) ;
- un élément élastique (13) agencé entre la première demi-coque (11) et la seconde demi-coque (12) et adapté pour amortir les vibrations transmises entre les deux demi-coques (11, 12),
- un premier prolongement axial (21) et un second prolongement axial (22) adaptés pour être insérés respectivement dans le premier logement (14) de la première demi-coque (11) et dans le second logement (16) de la seconde demi-coque (12), dans lequel la première demi-coque (11) et la seconde demi-coque (12) sont chacune raccordées à l'élément élastique (13) au moyen d'une broche correspondante (15) qui est montée transversalement par rapport à l'axe (X-X) de l'accouplement élastique (10),
**caractérisé en ce que** la première demi-coque (11) et la seconde demi-coque (12) ont une forme cylindrique et comprennent chacune un segment (23) qui fait saillie depuis la surface de base de la demi-coque cylindrique faisant face à l'élément élastique (13), et **en ce que** ledit élément élastique (13) comprend une pluralité de prolongements radiaux (25) qui sont formés d'un seul tenant avec le premier prolongement axial (21) et avec le second prolongement axial (22) et qui s'étendent radialement autour de l'axe (X-X) de l'accouplement élastique (10), les segments (23) étant adaptés pour coopérer avec les prolongements radiaux (25) de façon à conserver l'élément élastique (13) dans la position de travail.

2. Accouplement élastique (10) selon la revendication 1, **caractérisé en ce que** lesdites broches (15) sont montées perpendiculairement par rapport à l'axe (X-X) de l'accouplement élastique (10), à travers de premiers trous (18) formés dans les parois de chaque demi-coque (11, 12), et à travers de seconds trous (19) passant à travers l'élément élastique (13).

3. Accouplement élastique (10) selon la revendication 2, **caractérisé en ce que** lesdits seconds trous (19) passant à travers l'élément élastique (13) sont réalisés à travers les prolongements axiaux (21, 22) de l'élément élastique (13).

4. Accouplement élastique (10) selon l'une des revendications précédentes, **caractérisé en ce que** ledit élément élastique (13) comprend un corps central (29) formé d'un seul tenant avec le premier prolongement axial (21), avec le second prolongement axial (22) et avec les prolongements radiaux (25), dans lequel lesdits prolongements radiaux (25) s'étendent radialement depuis le corps central.

5. Accouplement élastique (10) selon l'une des revendications précédentes, **caractérisé en ce que** la première demi-coque (11), la seconde demi-coque (12), le premier logement (14), le second logement (16) et les prolongements axiaux (21, 22) de l'élément élastique (13) présentent une forme cylindrique.

6. Accouplement élastique (10) selon l'une des revendications précédentes, **caractérisé en ce que** ladite première demi-coque (11) et ladite seconde demi-coque (12) sont les mêmes et l'accouplement élastique (10) est formé avec les demi-coques tournées à 90° l'une par rapport à l'autre autour de l'axe (X-X) de l'accouplement élastique (10).

7. Accouplement élastique (10) selon l'une des revendications précédentes, **caractérisé en ce que** ladite première demi-coque (11) et ladite seconde demi-coque (12) comprennent respectivement une première extrémité (24) opposée audit premier logement (14) et une seconde extrémité (26) opposée audit second logement (16), lesdites première et seconde extrémités (24, 26) étant adaptées pour être raccordées d'un seul bloc à des éléments externes ou des éléments d'extrémité, en particulier à un arbre d'une colonne de direction.

8. Accouplement élastique (10, 10a, 10b) selon la revendication 7, **caractérisé en ce qu'**au moins l'une de ladite première demi-coque (11) et de ladite seconde demi-coque (12) comprend une extrémité (24a, 24, 26) ayant une rainure de clavette (27) ou une encoche (28) pour raccorder d'un seul bloc l'accouplement (10, 10a, 10b) à un arbre.

9. Accouplement élastique (10, 10c, 10d) selon l'une des revendications 7 ou 8, **caractérisé en ce qu'**il comprend un joint de cardan (30) intégré dans une demi-coque (12c).

10. Accouplement élastique (10, 10d, 10e, 10f) selon l'une des revendications 7, 8 ou 9, **caractérisé en ce qu'**il comprend au moins un arbre (31, 33) raccordé d'un seul bloc à une demi-coque (11d, 12f).

11. Elément élastique (13) pour un accouplement élastique (10) selon l'une des revendications précédentes, comprenant un premier prolongement axial (21) et un second prolongement axial (22) adaptés pour être insérés respectivement dans une première demi-coque (11) et dans une seconde demi-coque (12) de l'accouplement élastique (10), selon lequel lesdits prolongements axiaux (21, 22) comprennent en outre des trous (19) réalisés transversalement à l'axe (X-X) de l'accouplement élastique (10) et adaptés pour loger des broches (15) pour raccorder la première demi-coque (11) et la seconde demi-coque (12) à l'élément élastique (13), ledit élément élastique (13) comprenant en outre une pluralité de prolongements radiaux (25) qui sont formés d'un seul tenant avec le premier prolongement axial (21) et avec le second prolongement axial (22) et qui s'étendent radialement autour de l'axe (X-X) de l'accouplement élastique (10).
